Europäisches Patentamt

European Patent Office

Office européen des brevets

(11) Publication number: **0 228 286**
A2

# (12) EUROPEAN PATENT APPLICATION

(21) Application number: **86310118.4**

(22) Date of filing: **23.12.86**

(51) Int. Cl.⁴: **G 11 B 23/04**
G 11 B 25/10, G 11 B 15/32

(30) Priority: **28.12.85 JP 293521/85**

(43) Date of publication of application:
**08.07.87 Bulletin 87/28**

(84) Designated Contracting States:
**AT CH DE ES FR GB IT LI NL**

(71) Applicant: **SONY CORPORATION**
**7-35 Kitashinagawa 6-Chome Shinagawa-ku**
**Tokyo 141 (JP)**

(72) Inventor: **Ohta, Toshiro c/o Patents Division**
**Sony Corporation 6-7-35 Kitashinagawa**
**Shinagawa-ku Tokyo 141 (JP)**

(74) Representative: **Thomas, Christopher Hugo et al**
**D Young & Co 10 Staple Inn**
**London WC1V 7RD (GB)**

(54) Magnetic tape cartridges.

(57) A chucking and driving mechanism for a disc-drive-compatible magnetic tape cartridge (10), includes a first chucking mechanism (216) for establishing chucking engagement between a centre core disc (202) of the magnetic tape cartridge (12) and a turntable (302) of a disc drive while the dis drive drives the magnetic tape (12) in a forward direction, and a second chucking mechanism (310) for establishing chucking engagement between the centre core disc (202) and the turntable (302) while the disc drive drives the magnetic tape (12) in a reverse direction.

FIG.5

EP 0 228 286 A2

**Description**

## MAGNETIC TAPE CARTRIDGES

This invention relates to magnetic tape cartridges. The invention particularly relates to tape drive mechanisms for magnetic tape cartridges.

Recent computers generally employ disc-based data storage systems as built-in or external units because of the fast access.

Various magnetic discs and disc drives have been proposed for storing data. For example, US patent US-A-4 445 155 discloses a typical microfloppy disc, that is a 3.5 inch (approximately 89 mm) floppy disc, and a disc drive therefor. The floppy disc is in the form of a floppy disc cartridge (or cassette) generally comprising a flexible magnetic disc and a cartridge (or cassette) casing. The flexible disc includes a centre core disc designed to be chucked on a turntable of the disc drive which rotates the flexible disc through the centre core disc.

Such floppy discs permit fast access. However, floppy discs have a limited data storage capacity, and archival or back-up storage of data stored on a hard disc generally requires twenty to eighty floppy discs. This involves substantial expense.

On the other hand, magnetic tapes have a much larger storage capacity than floppy discs, but are inconvenient when fast access to data is required. In other words, when fast access is not required, magnetic tapes are useful because of their large storage capacity. Therefore, as back-up storage for hard discs, magnetic tapes should be regarded as a useful and convenient medium to use.

In order to record and reproduce on or from magnetic tapes, a so-called 'data recorder' magnetic tape recording and reproducing apparatus is used, whereas recording and reproduction of data on and from magnetic discs is performed using a disc drive. Consequently, to use magnetic tapes as back-up storage media, a data recorder and a disc drive are required, which is an additional expense.

So as to allow the use of magnetic tape for inexpensive back-up storage of data on hard discs or floppy discs, it would be beneficial to provide a magnetic tape cartridge compatible with floppy disc drives, so that it can be driven by the same drive unit.

A magnetic disc is of course usually driven in rotating fashion. Therefore, one-way driving whereby the disc is driven in a fixed single rotational direction is usually acceptable. However, in the case of a disc drive-compatible magnetic tape cartridge single direction driving, even with fast rewind, results in the access period becoming unacceptably long. Therefore, it would be preferable to provide two-way driving, that is, forward and reverse direction driving, of the magnetic tape.

However, since the normal disc drive systems have been designed to drive a magnetic disc in a single direction, reverse direction driving has been impossible due to slip caused between the turntable of the disc drive and the centre core disc of the magnetic tape cartridge, and resulting misalignment of tape information tracks in relation to the magnetic recording head of the disc drive.

According to the present invention there is provided a magnetic tape cartridge characterised by:

a cartridge casing acceptable in a disc drive and defining therein a tape run path across a disc drive for establishing communication between a magnetic tape and said disc drive for recording and reproducing a tape track formed on said magnetic tape;

a tape driving mechanism for driving said magnetic tape along said tape run path, said tape driving mechanism being designed selectively to drive said magnetic tape both in forward and reverse directions; and

a centre core assembly received within said cartridge casing and exposed therefrom to be chucked by a disc driving mechanism of said disc drive;

said centre core assembly including a first chucking means active in forward direction drive of said magnetic tape for establishing chucking engagement between said centre core assembly and said disc driving mechanism for transmitting driving force of said driving mechanism to said tape drive mechanism, and a second chucking means active in reverse direction drive of said magnetic tape for establishing chucking engagement between said centre core assembly and said disc driving mechanism for transmitting driving force of said disc driving mechanism to said tape drive mechanism.

Thus, in an embodiment of the invention, a chucking and driving mechanism for the disc-drive-compatible magnetic tape cartridge includes a first chucking mechanism for establishing chucking engagement between a centre core disc of the magnetic tape cartridge and a turntable of a disc drive while the disc drive drives the magnetic tape in the forward direction, and a second chucking mechanism for establishing chucking engagement between the centre core disc and the turntable while the disc drive drives the magnetic tape in the reverse direction.

The first chucking means may comprise a through opening defined in the centre core assembly, and having at least one corner to receive a driving pin provided in the driving mechanism of the disc drive for fixedly receiving the driving pin at the corner for establishing the chucking engagement. The second chucking means may comprise a chucking pin extending from the centre core assembly and engageable with a chucking opening defined in the driving mechanism of the disc drive and having at least one corner, the chucking pin being fixedly engageable with the corner of the chucking opening for establishing chucking engagement. The chucking pin of the first chucking means may be normally biased in a direction away from the corner. The chucking pin of the second chucking means may be supported by means of a resilient member which normally biases the chucking pin towards the chucking opening.

In an embodiment, the centre core assembly may comprise a centre core disc formed with a groove extending around the periphery thereof for engaging with a drive belt which transmits driving force transmitted to the centre core disc to the tape drive mechanism. The cartridge casing houses a pair of tape reels wound therearound with the magnetic tape. The tape reels have aligned rotational axes. The tape drive mechanism cooperates with the tape reels for driving one of them according to the tape driving direction, by transmitting driving force transmitted through the centre core disc to that one of the tape reels.

The driving mechanism in the disc drive is designed drivingly to rotate the centre core disc of the magnetic tape cartridge in a first direction for driving the magnetic tape in the forward direction, and in a second direction opposite to the first direction for driving the magnetic tape in the reverse direction.

According to the present invention there is also provided a combination characterised by:
a chucking and driving mechanism for a disc drive and a disc-drive-compatible magnetic tape cartridge comprising means for defining a tape run path passing across a disc drive head for transferring data between a magnetic tape and said disc drive head, and means for selectively driving said magnetic tape in forward and reverse directions along said tape run path, said chucking and driving mechanism comprising:
a driving mechanism provided in said disc drive suitable for rotatingly driving a magnetic disc, said driving mechanism including a rotary disc driven by a drive shaft of the disc drive;
a centre core assembly rotatably provided in said magnetic tape cartridge and cooperating with said magnetic tape driving means for driving said magnetic tape in forward and reverse directions selectively;
a first chucking means, active while said magnetic tape is driven in said forward direction for chucking said centre core assembly of said magnetic tape cartridge onto said rotary disc of said disc drive so as to transmit driving torque of said drive shaft to said magnetic tape driving means therethrough; and
a second chucking means, active while said magnetic tape is driven in said reverse direction for chucking said centre core assembly onto said rotary disc so as to transmit driving torque of said drive shaft to said magnetic tape driving means.

The centre core assembly may comprise a centre core disc to be chucked on the rotary disc of the disc drive to rotate therewith and thereby transmit driving torque of the drive shaft. Each of the first and second chucking means may comprise a chucking pin coupled with one of the centre core disc and the rotary disc and a chucking aperture formed in the other of the centre core disc and the rotary disc, and having at least one corner into which the chucking pin is urged for establishing chucking engagement between the centre core disc and the rotary disc. The chucking pin may be resiliently supported by means of a resilient member for assuring chucking engagement with the chucking aperture.

The magnetic tape cartridge may further comprise first and second reels provided at respective ends of the tape run path with the magnetic tape wound therearound for feeding the magnetic tape from one to the other. The first and second tape reels may have aligned rotational axes.

The magnetic tape driving means may comprise a first gear provided for rotation of the first reel, a second gear provided for rotation of the second reel, and a third gear coupled with the centre core disc to be driven by driving torque transmitted through the centre core disc as chucked on the rotary disc, the third gear being movable between a first position where it engages with the first gear for transmitting driving torque to the first gear in forward drive of the magnetic tape, and a second position where it engages with the second gear for transmitting driving torque to the second gear in reverse drive of the magnetic tape.

The invention will now be described by way of example with reference to the accompanying drawings, throughout which like parts are referred to by like references, and in which:

Figure 1 is a perspective view of an embodiment of disc-drive-compatible magnetic tape cartridge according to the present invention;

Figure 2 is a perspective view of the embodiment of Figure 1, as viewed from the bottom;

Figure 3 is a plan view of the embodiment of Figure 1, in which a portion of an upper half of the cartridge is removed to show a tape drive mechanism;

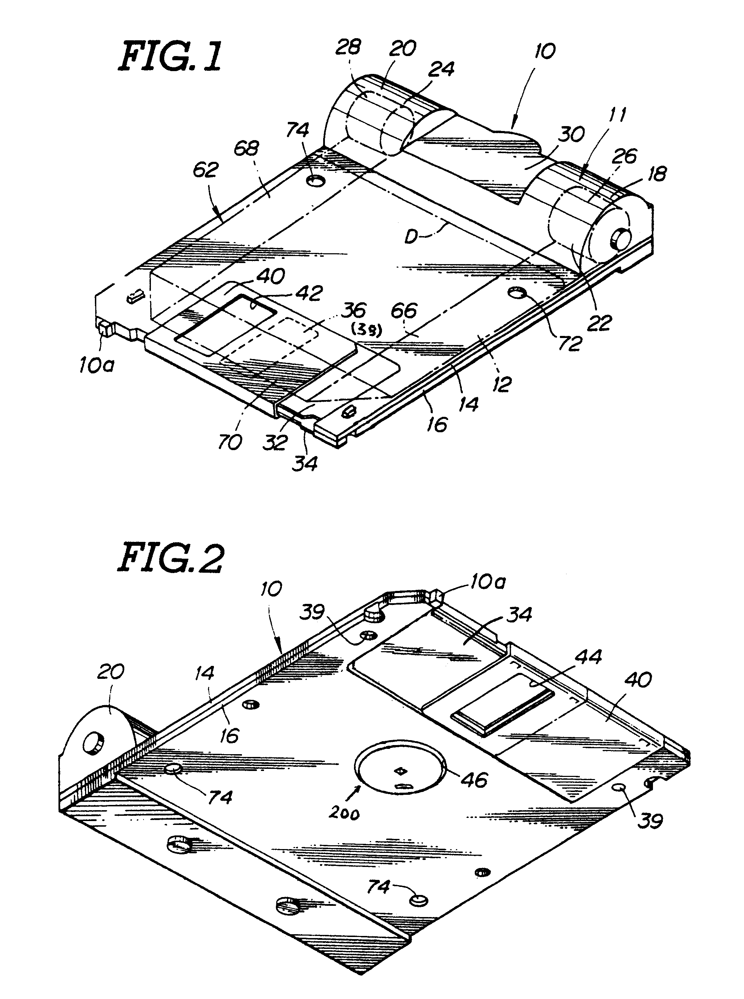

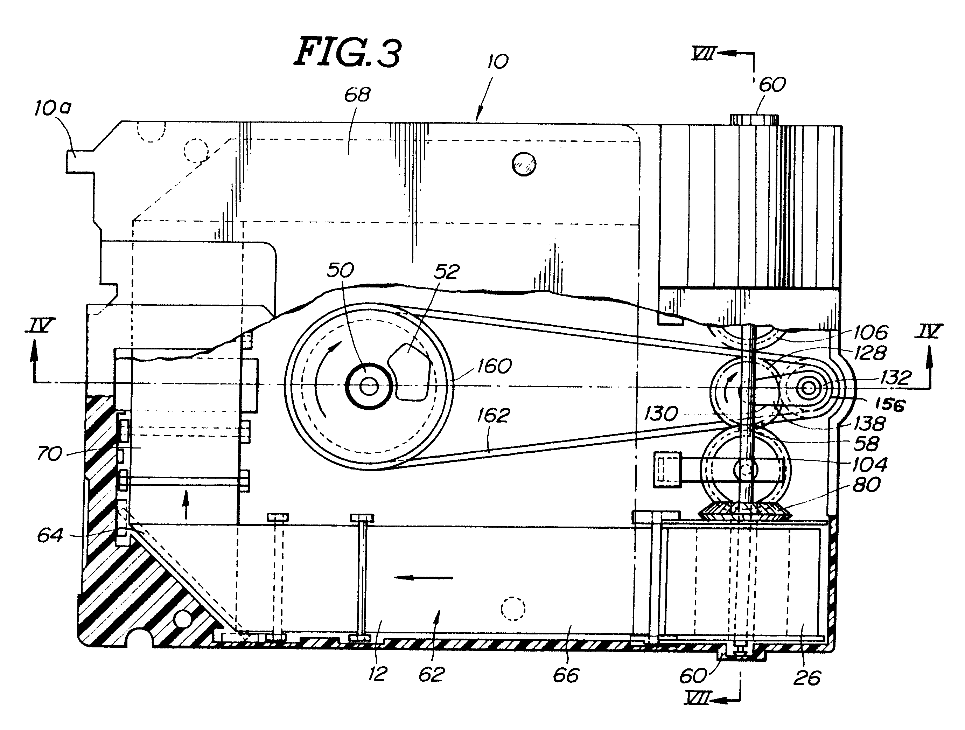

Figue 4 is an enlarged longitudinal section of the embodiment of Figure 1, with the tape drive mechanism, which section is taken along line IV-IV of Figure 3;

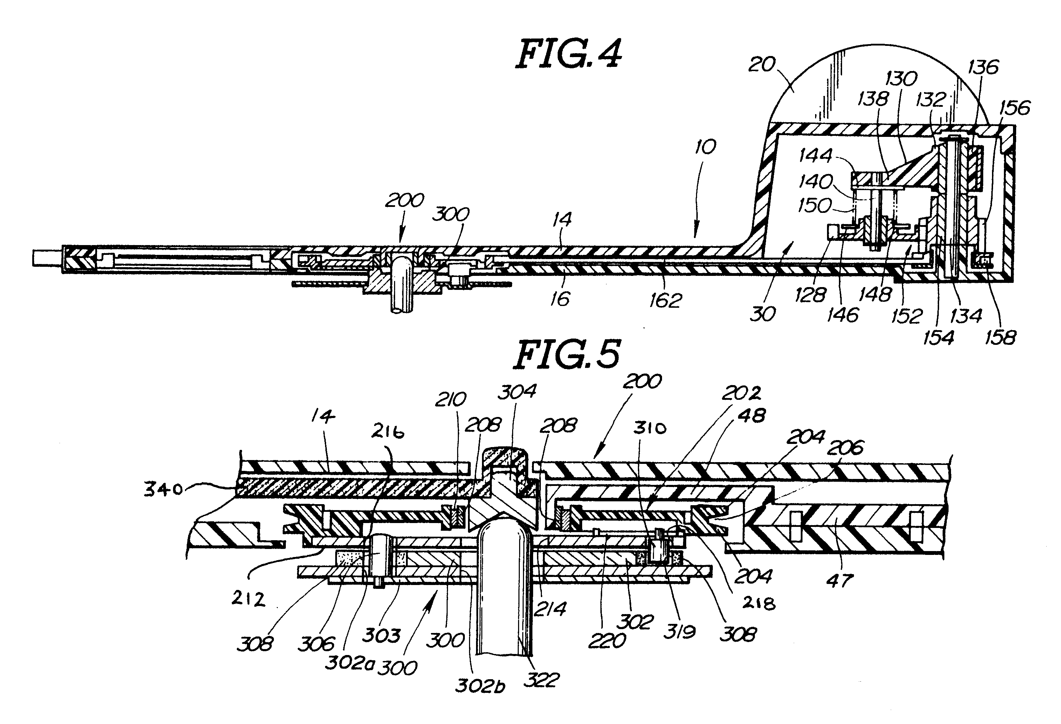

Figure 5 is an enlarged section of a centre core disc in Figue 4;

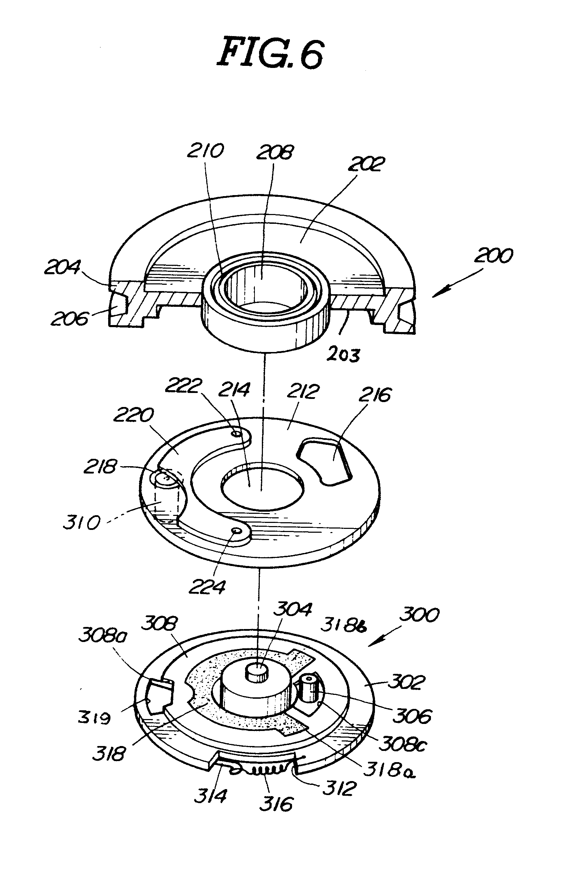

Figure 6 is an exploded perspective view of a chucking mechanism;

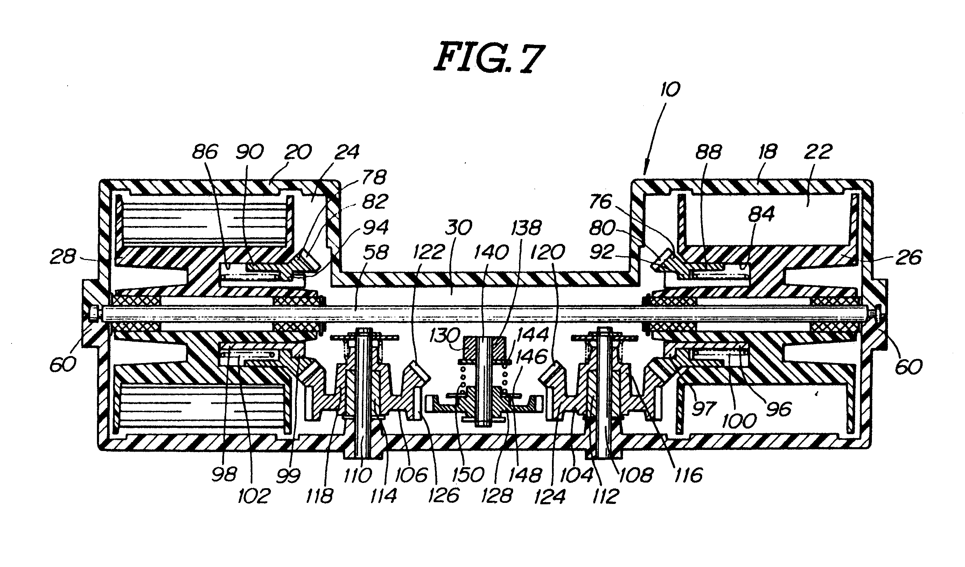

Figure 7 is a cross-section taken along line VII-VII in Figure 3; and

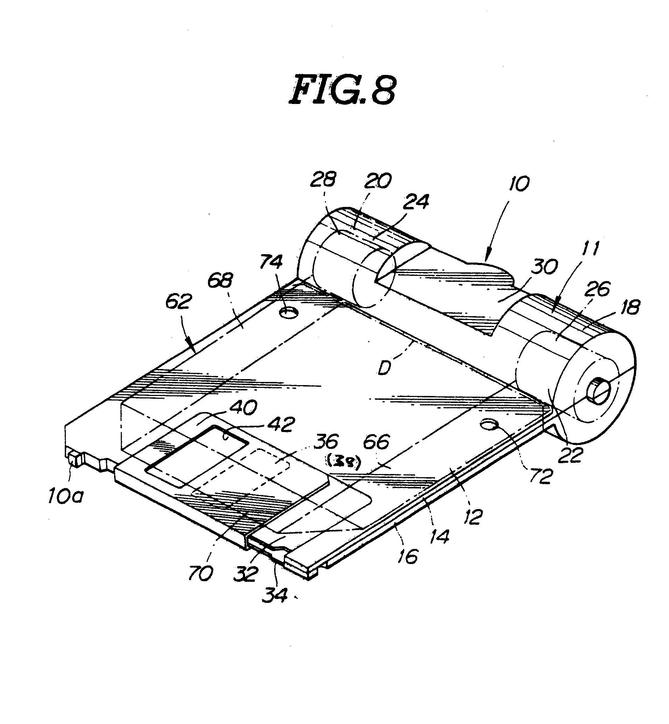

Figure 8 is a perspective view of a modified embodiment of disc-drive-compatible magnetic tape cartridge according to the present invention.

Referring now to Figures 1 to 3, the embodiment of magnetic tape cartridge 10 is formed in a thin, rectangular-box-shaped configuration, which is compatible with a disc drive for flopply discs of corresponding size, such as 3.5 inch (approximately 89 mm) microfloppy discs of the type disclosed in US-A-4 445 155. However, it should be appreciated that the present invention is applicable to magnetic tape cartridges compatible with disc drives of any size. Furthermore, although the magnetic tape cartridge described below employs a magnetic tape having two ends respectively wound around supply and take-up reels, the invention is also applicable to an endless-loop-type tape cartridge.

A magnetic tape 12 is housed within the cartridge 10. The cartridge 10 is made up of an upper half 14 and a lower half 16. The halves 14 and 16 are of equal size in plan view and are fixed to each other to form the cartridge 10. The cartridge 10 is of substantially the same size and shape as the microfloppy disc cartridge disclosed in US-A-4 445 155, but is longer than that disc cartridge. The length of the normal disc cartridge is illustrated by the line D in Figure 1. Thus, the cartridge 10 has an extra section 11 which accommodates the tape reels, the tape drive mechanism and so forth. When the cartridge 10 is loaded into a disc drive for which it is designed, the extra section 11 will remain outside of the disc drive, protruding from the opening of the disc drive.

The cartridge 10 is further formed with a projection 10a projecting from the front end of the cartridge 10. The projection 10a serves as an indicator for making the disc drive recognize that the cartridge 10 is used.

However, it would be possible to make the cartridge 10 match the floppy disc cartridge not only in width and thickness, but also in length, if necessary.

The upper half 14 has semi-cylindrical hollow extensions 18 and 20 near its rear corners and along its rear edge ('rear' referring to the direction of insertion into the disc drive). The extensions 18 and 20 extend upwards from the upper surface of the upper half 14 and thus define tape reel recessess 22 and 24 receiving a supply reel 26 and a tape-up reel 28. A space 30 for a power train, which will be described in detail later, remains between the tape reel recesses 22 and 24.

The halves 14 and 16 have recesses 32 and 34 exposed to the outside on their upper and lower surfaces respectively. Longitudinally (with respect to the direction of insertion) elongated tape access apertures 36 and 38 are formed in the halves 14 and 16 within the recesses 32 and 34. The tape access apertures 36 and 38 aligned with each other to allow a disc drive head (not shown) of a disc drive access to the tape 12. The disc drive can be the same as or slightly modified from that disclosed in US-A-4 445 155.

The lower half 16 also has positioning holes 39 for positioning the cartridge 10 within the disc drive. The positioning holes 39 receive positioning pins (not shown) built into the disc drive.

A sliding shutter 40, shown closed in Figure 1 and open in Figure 2, slidingly engages the recesses 32 and 34. Upper and lower surfaces of the shutter 40 lie flush with the upper and lower surfaces of the cartridge 10 as assembled. The shutter 40 has longitudinally elongated apertures 42 and 44 of the same size and configuration as the tape access apertures 36 and 38 of the cartridge 10. The shutter 40 is movable between the closed position, in which the apertures 42 and 44 are offset from the tape access apertures 36 and 38 and the tape 12 is hidden, and the open position, in which the apertures 42 and 44 are aligned with the tape access apertures 36 and 38 to allow the disc drive head access to the tape 12. The sliding shutter 40 is normally biased by a spring (not shown) towards the closed position, and is actuated to the open position when the cartridge 10 is inserted into the disc drive.

In order to drive couple the cartridge 10 to a disc drive, a chucking mechanism is provided. Referring now to Figures 4, 5 and 6, the chucking mechanism generally comprises a centre core assembly 200 in the cartridge 10 and a turntable assembly 300 in the disc drive. The centre core assembly 200 is exposed through a central aperture 46 formed in the lower half 16 of the cartridge 10. The centre core assembly 200 comprises a centre core disc 202. The centre core disc 202 is rotatably mounted on a support plate 47 which is fixed to the upper surface of the lower half of the cartridge 16. The support plate 47 has a substantially C-shaped end section 48 which defines a recess for receiving a part of the centre core disc 202 through a bearing 208, such as an oil-less metal bearing. The centre core disc 202 opposes the central aperture 46 in the lower half16, and is thus exposed through the central aperture 46 of the lower half 16. The centre core disc 202 is formed in substantially H-shaped configuration in cross-section, and thus comprises an annular-disc-form main section 203 and a cylindrical inner flange section 204, as clearly shown in Figure 6. A substantially V-shaped groove 206 is formed on the outer periphery of the flange section 204. The centre core disc 202 also has a cylindrical inner flange section 210. The inner flange section 210 has an internal diameter approximately corresponding to the external diameter of the bearing 208. Therefore, the inner flange section 210 slidingly and loosely contacts the outer periphery of the bearing 208 for allowing rotation of the centre core disc 202 about the bearing 208.

The centre core disc 202 also defines a recess at the underside thereof. A driven plate 212 is received within the recess and is fixed to the centre core disc 202 for rotation therewith. The driven plate 212 is formed with a centre positioning aperture 214 and a driving and positioning aperture 216. The driving and positioning aperture 216 is offset by a given distance from the centre positioning aperture 214. The centre positioning aperture 214 is designed to engage a disc drive motor spindle 322 through a metal fitting 304 which is fixedly mounted on a tape guide member 340. On the other hand, the driving and positioning aperture 216 is designed to engage a driving pin 306 mounted on a turntable 302 of the disc drive through a resilient leaf spring 303. The driving pin 306 is fixed to the leaf spring 303 and is normally biased upwardly. Therefore, the driving pin 306 extends upwardly through an aperture 302a formed through the turntable 302 to engage with the driving and positioning aperture 216.

The turntable 302 is driven to rotate by the motor spindle 322. Therefore, the centre core disc 202 is driven to rotate by the driving force transmitted through the turntable 302 of the disc drive with engagement of the driving and positioning aperture 216 and the driving pin 306 in well known manner. In order to establish chucking engagement between the driving pin 306 and the driving positioning aperture 216, the leaf spring 303 is rotationly biased by a bias coil spring 316. The coil spring 316 is disposed in a recess 312 formed on the outer periphery of the turntable 302, and engages with an engaging aperture formed in the vicinity of one edge of the recess 312 at one end. The other end of the coil spring 316 engages with a hook 314 formed on the leaf spring 303. By the resilient force of the coil spring 316, the leaf spring 303 is normally biased in the counter-clockwise direction as viewed in Figure 6.

The driven plate 212 is also formed with a circular aperture 218 to receive therethrough an auxiliary drive pin 310. The auxiliary drive pin 310 is resiliently supported by means of an arc-shaped leaf spring 220 which has its ends 222 and 224 fixed to the upper surface of the driven plate 212. The spring 220 resiliently biases the auxiliary drive pin 310 downwardly to protrude from the lower surface of the driven plate 212. The auxiliary drive pin 310 drivingly engages with a driving aperture 319 of the turntable 302 through a recess 308a formed on the outer periphery of a drive ring 308 fitted to the turntable 302. The drive ring 308 is also formed with a substantially rectangular aperture 308c to receive therethrough the driving pin 306. The auxiliary drive pin 310 is so arranged as to establish chucking engagement with the driving aperture 319 in reverse driving of the tape 12.

The drive ring 308 generally surrounds a magnetic plate 318. The magnetic plate 318 is of generally U-shaped configuration and is arranged around a centre opening 302b of the turntable 302. The magnetic plate 318 has extensions 318a and 318b respectively engaging with recesses formed in the inner periphery of the driving ring 308. The magnetic plate 318 is so designed as to draw and magnetically engage the driven plate 212 for assisting driving engagement between the turntable 302 and the centre core disc 202.

As will be appreciated herefrom, when the tape 12 is to be driven in the forward direction, the driving pin 306 of the turnable 302 establishes clutching engagement with the driving and positioning aperture 216 of the driven plate 212 to rotate the centre core disc 202, by contacting the periphery thereof against the peripheral edges in the vicinity of the corner of the driving and positioning aperture 216. On the other hand, when the turntable 302 is driven in the reverse direction to drive the tape 12 in reverse direction, the auxiliary driven pin 310 contacts with the peripheral edges of the driving aperture 319 to establsih chucking engagement. Therefore, the tape 12 can be steadily driven both in forward and reverse directions.

The supply and take-up reels 26 and 28 are rotatably supported by a support shaft 58, the ends of which are fixed to boss sections 60 formed on the side walls of the semi-cylindrical extensions 18 and 20 as shown in Figures 3 and 7. Therefore, the reels 26 and 28 are mounted within the tape reel recessess 22 and 24 with their axes laying transversely. A tape run path 62 is defined within the thin space defined in the front portion of the cartridge 10 along which the tape 12 passses between the tape access apertures 36 and 38. Tape guides 64 define the tape run path 62. As will be seen from Figures 1 and 3, the tape run path 62 has a first section 66 near the supply reel 26 and extending longitudinally along one edge of the cartridge 10, a second section 68 near the take-up reel 28 and extending longitudinally along the other edge of the cartridge 10, and a third section 70 extending laterally across the front edge and between the tape access apertures 36 and 38.

At the junctures of the first section 66 and the third section 70, and of the second section 68 and the third section 70, the tape guides 64 are provided to deflect the tape 12.

In this disclosure, the word 'longitudinal' used in connection with the tape path means the axis of movement along the first and second sections 66 and 68 of the tape run path 62 set forth above, and the word 'lateral' used in connection with the tape path means the axis of movement along the third section 70 of the tape run path 62 set forth above.

The halves 14 and 16 have circular openings 72 and 74 opposing the first and second sections 66 and 68 of the tape run path 62. Through the openings 72 and 74, the tape run path 62 can be monitored to detect the presence or absence of the tape 12. Such tape monitoring is a well known technique in tape recording and/or reproducing apparatus.

In order selectively to drive the reels 26 and 28 for recording and/or reproduction in forward and reverse directions, the cartridge 10 is provided with a specially designed tape drive mechanism. In general, the take-up reel 28 is driven to extract the tape 12 from the supply reel 26 through the tape run path 62 during recording and reproduction. This tape direction will be referred to as 'forward'. On the other hand, the supply reel 26 must be driven to extract the tape 12 from the take-up reel 28 during rewinding. The supply reel 26 drives the magnetic tape 12 through the tape run path 62 in the direction opposite to the forward direction. This direction will be referred to as 'reverse'.

The tape drive mechanism includes a pair of bevel gear blocks 76 and 78 best seen in Figure 7. The bevel gear blocks 76 and 78 are generally cylindrical and have bevel gears 80 and 82 respectively at one end thereof. The bevel gear blocks 76 and 78 are coaxially mounted on the facing axial ends of the reels 26 and 28, respectively. The reels 26 and 28 are formed with annular grooves 84 and 86, respectively. The cylindrical sections 88 and 90 of the bevel gear blocks 76 and 78 are inserted into the annular grooves 84 and 86 of the supply reel 26 and the take-up reel 28. Annular projections 92 and 94 are formed on the inner periphery of the cylindrical sections 88 and 90 of the bevel gear blocks 76 and 78. Cylindrical retainers 96 and 98 with flanges 97 and 99 are fitted into the annular grooves 84 and 86 so as to retain the cylindrical sections 88 and 90 of the bevel gear blocks 76 and 78 within the annular grooves 84 and 86. Compression coil springs 100 and 102 are also disposed within the annular grooves 84 and 86. One end of each spring 100 and 102 seats on the bottom of the respective annular groove 84 or 86 and the opposite end seats on the annular projection 92 or 94 of the cylindrical sections 88 and 90 in order to bias the bevel gear blocks 76 and 78 against the flanges 97 and 99 of the retainers 96 and 98.

The bevel gear blocks 76 and 78 are rotatable with the supply reel 26 and the take-up reel 28. If necessary, the bevel gear blocks 76 and 78 can be keyed to the inner periphery of the annular grooves 84 and 86 with suitable keying means so as to ensure rotation with the associated supply reel 26 or take-up reel 28.

A pair of intermediate gear blocks 104 and 106 are rotatably supported by gear shafts 108 and 110 extending vertically from the floor of the cartridge 10. Bearings 112 and 114 are disposed between the gear shafts 108 and 110 and cylindrical sections 116 and 118 of the intermediate gear blocks 104 and 106. The gear shafts 108 and 110 are arranged in lateral alignment at a given distance from each other. The distance between the gear shafts 108 and 110 is slightly greater than or approximately equal to twice the outer diameter of the intermediate gear blocks 104 and 106. The intermediate gear blocks 104 and 106 have bevel gears 120 and 122 respectively at their upper ends. Respective bevel gears 120 and 122 constantly engage the corresponding bevel gears 80 and 82.

The intermediate gear blocks 104 and 106 also have plane gears 124 and 126 below the bevel gears 120 and 122. The plane gears 124 and 126 lie in the same horizontal plane at a given distance from each other. Since the gear shafts 108 and 110 are separated by a distance slightly greater than or approximately equal to the outer diameter of the intermediate gear blocks 104 and 106, the distance between the plane gears 124 and 126 is slightly greater than the outer diameter thereof.

As shown in Figure 4, a two-way coupling gear 128 is disposed between the plane gears 124 and 126. The two-way coupling gear 128 is mounted on a pivotal base 130. The pivotal base 130 has a cylindrical base section 132 pivotably mounted at the top of a pivot shaft 134 extending vertically from the floor of the cartridge 10. A sleeve bearing 136 is interposed between the inner periphery of the cylindrical base section 132 and the outer periphery of the pivot shaft 134 to allow pivotal movement of the pivotal base 130. The pivotal base 130 also has a pivoting arm 138. A gear shaft 140 extends downward from the pivoting arm 138. Adjacent to its lower end, the gear shaft 140 carries the two-way coupling gear 128. The two-way coupling gear 128 is rotatable about the gear shaft 140. A sleeve bearing 142 is disposed between the contacting faces of the gear shaft 140 and the two-way coupling gear 128.

An annular slip plate 144 loosely engages the gear shaft 140 for the two-way coupling gear 128. Also, an annular-disc-shaped spring seat 146 engages the stepped outer periphery 148 of the two-way coupling gear 128. A compression coil spring 150 is disposed between the slip plate 144 and the spring seat 146 to exert a biasing spring force on the slip plate 144 for frictional engagement with the lower surface of the pivoting arm 138. At the same time, the spring force of the coil spring 150 is exerted on the two-way coupling gear 128 through the spring seat 146. The slip plate 144 and the coil spring 150 form a clutch mechanism which causes the pivotal base 130 to pivot so as to bring the two-way coupling gear 128 into engagement with one of the plane gears 124 and 126 of the intermediate gear blocks 104 and 106, depending on the direction of rotation of the two-way gear 128.

A drive gear block 152 is mounted at the lower end of the pivot shaft 134 through a sleeve bearing 154.

The drive gear block 152 has a drive gear 156 constantly engaging the two-way coupling gear 128. The drive gear block 152 also has a pulley 158 integrally formed with the drive gear 156. The pulley 158 is connected to a pulley 160 integral with a centre core disc 202 of a centre core assembly 200, which will be described later, by means of a driving belt 162.

It should be appreciated that the gear ratio of the aforementioned tape drive mechanism is selected so as to drive the tape 12 at a speed equal to the rotational speed of a floppy disc on the same disc drive. Specifically, the tape speed at the third section 70 of the tape run path 62 has to be equal to the rotational speed of a floppy disc, so that the disc drive can use the same recording and reproduction operations without adjustment.

For a conventional 3.5 inch (approximately 89 mm) floppy disc, rotation is at about 600 r.p.m. so as to be free of peak-shift errors and data drop-out. Therefore, if it is assumed that the linear velocity of the outermost track is V1 and that of the innermost track is V2, it is favourable that the feed rate V of the tape 12 be $V2 < V < V1$.

In order to drive the tape 12 forward (from the supply reel 26 onto the take-up reel 28), the turntable 302 is driven clockwise in Figure 3. With clockwise rotation of the turntable 302, the centre core disc 202 is driven clockwise. The clockwise rotational force is transmitted from the pulley 160 of the centre core disc 202 to the pulley 158 of the drive gear block 152 through the drive belt 162. Therefore, the drive gear 156 is driven to rotate clockwise in Figure 3.

As long as the two-way coupling gear 128 remains free of the plane gears 124 and 126 of the intermediate gear blocks 104 and 106, the slip plate 144 maintains frictional engagement with the mating surface of the pivoting arm 138 of the pivotal base 130 due to the spring force of the coil spring 150. Therefore, the rotational force transmitted by the drive gear 156 of the drive gear block 152 to the two-way coupling gear 128 serves to drive the pivotal base 130 to pivot clockwise.

Once the two-way coupling gear 128 comes into engagement with the plane gear 126 of the intermediate gear block 106, pivotal movement of the pivotal base 130 is restricted. Then the rotational driving force transmitted by the drive gear 156 to the two-way coupling gear 128 overcomes the spring force of the coil spring 150 and so causes slip between the mating surfaces of the slip plate 144 and the pivoting arm 138. As a result, the two-way coupling gear 128 starts to rotate counter-clockwise, thereby driving the plane gear 126 of the intermediate gear block 106 clockwise. The bevel gear 122 of the intermediate gear block 106 thus rotates clockwise, which causes the bevel gear 76 to drive the take-up reel 28 to wind in the tape 12.

On the other hand, in order to switch from forward to reverse, the direction of rotation of the turntable 302 is switched from clockwise to counter-clockwise as viewed in Figure 3. With counter-clockwise rotation of the turntable 302, the centre core disc 48 is driven counter-clockwise. The counter-clockwise rotational force is transmitted from the pulley 160 of the centre core disc 202 to the pulley 158 of the drive gear block152 through the drive belt 162. Therefore, the drive gear 156 is driven counter-clockwise in Figure 3.

As long as the two-way coupling gear 128 remains free of the plane gear 124 of the intermediate gear block 104, the slip plate 144 maintains frictional engagement with the mating surface of the pivoting arm 138 of the pivotal base 130 due to the spring force of the coil spring 150 as the two-way coupling gear 128 becomes free from the clockwise rotational force of the drive gear 156. Therefore, the counter-clockwise rotational force transmitted by the drive gear 156 of the drive gear block 152 to the two-way coupling gear 128 serves as a driving force for the pivotal base 130, causing the pivotal base to pivot counter-clockwise in Figure 3.

Once the two-way coupling gear 128 comes into engagement with the plane gear 124 of the intermediate gear block 104, pivotal movement of the pivotal base 130 is restricted. Then, the rotational driving force transmitted by the drive gear 156 to the two-way coupling gear 128 overcomes the spring force of the coil spring 150, causing slip between the mating surfaces of the slip plate 144 and the pivoting arm 138. As a result, the two-way coupling gear 128 starts to rotate clockwise, thus driving the plane gear 124 of the intermediate gear block 104 counter-clockwise. The bevel gear 120 of the intermediate gear block 104 is thus rotated clockwise, causing the bevel gear 74 to drive the supply reel 26 to rewind the tape 12.

In this embodiment, magnetic tape 12 three-quarters inch (approximately 19 mm) wide is employed in the cartridge 10. In this case, eight recording tracks can be formed, which corresponds to the numer that can be formed on a 3.5 inch (approximately 89 mm) floppy disc. Each track formed on the tape 12 extends longitudinally along the tape 12. It will be appreciated that the length of each track depends solely on the length of the tape 12, and so can be substantially longer than the length of the recording tracks formed on a 3.5 inch (approximately 89 mm) floppy disc. In general, the capacity of each track on the tape 12 will be several tens of times greater than that of a track on a floppy disc. If the tape 12 is 12 m long, the capacity of the cartridge 10 will be approximately 20 metabytes.

To increase the capacity, the reels 26 and 28 can be made larger, as shown in the modified embodiment of Figure 8, to accommodate a longer tape 12. In this modified embodiment, the extra section 11 extends above and below the general plane of the cartridge 10, instead of only above as in the first embodimetn.

It will be appreciated that the tape 12 can be tracked by means of known mechanisms employed in known disc drives.

As will also be appreciated, embodiments of magnetic tape cartridge according to the present invention can provide a very large data storage capacity. Therefore, such cartridges are suitable for use as back-up storage for hard discs or floppy discs. Furthermore, such cartridges can be utilized in a filing system which requires high-capacity memory media.

### Claims

1. A magnetic tape cartridge (10) characterised by:
a cartridge casing (14, 16) acceptable in a disc drive and defining therein a tape run path (62) across a disc drive for establishing communication between a magnetic tape (12) and said disc drive for recording and reproducing a tape track formed on said magnetic tape (12);
a tape driving mechanism (128) for driving said magnetic tape (12) along said tape run path (62), said tape driving mechanism (128) being designed selectively to drive said magnetic tape (12) both in forward and reverse directions; and
a centre core assembly (200) received within said cartridge casing (14, 16) and exposed therefrom to be chucked by a disc driving mechanism (302) of said disc drive;
said centre core assembly (200) including a first chucking means (216) active in forward direction drive of said magnetic tape (12) for establishing chucking engagement between said centre core assembly (200) and said disc driving mechanism (302) for transmitting driving force of said disc driving mechanism (302) to said tape driving mechanism (128), and a second chucking means (310) active in reverse direction drive of said magnetic tape (12) for establishing chucking engagement between said centre core assembly (200) and said disc driving mechanism (302) for transmitting driving force of said disc driving mechanism (302) to said tape driving mechanism (128).

2. A magnetic tape cartridge (10) according to claim 1 wherein said centre core assembly (200) comprises a centre core disc (202) formed with a groove (206) extending around the periphery thereof for engaging with a drive belt (162) which transmits driving force transmitted to said centre core disc (202) to said tape driving mechanism (128).

3. A magnetic tape cartridge (10) according to claim 2 wherein said cartridge casing (14, 16) houses a pair of tape reels (26, 28) around which said magnetic tape (12) is wound.

4. A magnetic tape cartridge (10) according to claim 3 wherein said tape reels (26, 28) have aligned rotational axes.

5. A magnetic tape cartridge (10) according to claim 4 wherein said tape driving mechanism (128) cooperates with said tape reels (26, 28) to drive one of the tape reels (26, 28) according to the tape driving direction by transmitting driving force transmitted through said centre core disc (202) to said one of the tape reels (26, 28).

6. A magnetic tape cartridge (10) according to claim 5 wherein said disc driving mechanism (302) is designed drivingly to rotate with said centre core disc (202) of said magnetic tape

13    **0 228 286**    14

cartridge (10) in a first direction for driving said magnetic tape (12) in said forward direction and in a second direction opposite to said first direction for driving said magnetic tape (12) in said reverse direction.

7. A magnetic tape cartridge (10) according to claim 1 or claim 6 wherein said first chucking means (216) comprises a through opening (216) defined in said centre core assembly (200) and having at least one corner, to receive a driving pin (306) provided in said disc driving mechanism for fixedly receiving said driving pin (306) at said corner for establishing said chucking engagement.

8. A magnetic tape cartridge (10) according to claim 7 wherein said driving pin (306) is normally biased in a direction away from said corner.

9. A magnetic tape cartridge (10) according to claim 7 wherein said second chucking means (310) comprises a chucking pin (310) extending from said centre core assembly (202) and engageable with a chucking opening (319) defined in said disc driving mechanism (302) and having at least one corner, said chucking pin (310) being fixedly engageable with said corner of said chucking opening (319) for establishing chucking enegagement.

10. A magnetic tape cartridge according to claim 9 wherein said chucking pin (310) is supported by means of a resilient member (220) which normally biases said chucking pin (310) towards said chucking opening (319).

11. A combination characterised by:
a chucking and driving mechanism for a disc drive and a disc-drive-compatible magnetic tape cartridge (10) comprising means (64) for defining a tape run path (62) passing across a disc drive head for transferring data between a magnetic tape (12) and said disc drive head, and means (128) for selectively driving said magnetic tape (12) in forward and reverse directions along said tape run path (62), said chucking and driving mechanism comprising:
a driving mechanism (300) provided in said disc drive suitable for rotatingly driving a magnetic disc, said driving mechanism (300) including a rotary disc (302) driven by a drive shaft (322) of the disc drive;
a centre core assembly (200) rotatably provided in said magnetic tape cartridge (10) and cooperating with said magnetic tape driving means (128) for driving said magnetic tape (12) in forward and reverse directions selectively;
a first chucking means (216), active while said magnetic tape (12) is driven in said forward direction for chucking said centre core assembly (200) of said magnetic tape cartridge (10) onto said rotary disc (302) of said disc drive so as to transmit driving torque of said drive shaft (322) to said magnetic tape driving means (128) therethrough; and
a second chucking means (310), active while said magnetic tape (12) is driven in said reverse direction for chucking said centre core assembly (200) onto said rotary disc (302) so as to transmit driving torque of said drive shaft (322) to said magnetic tape driving means (128).

12. A combination according to claim 11 wherein said centre core assembly (200) comprises a centre core disc (202) to be chucked on said rotary disc (302) of said disc drive for rotation therewith and thereby transmitting driving torque of said drive shaft (322) therethrough.

13. A combination according to claim 12 wherein each of said first and second chucking means (216, 310) comprises a chucking pin (306, 310) coupled with one of said centre core disc (202) and said rotary disc (302) and a chucking aperture (216, 319) formed in the other of said centre core disc (202) and said rotary disc (302) and having at least one corner to which said chucking pin (306, 310) is urged for establishing chucking engagement between said centre core disc (202) and said rotary disc (302).

14. A combination according to claim 13 wherein said chucking pin (306, 310) is resiliently supported by means of a resilient member (303, 220) for assuring chucking engagement with said chucking aperture (216, 319).

15. A combination according to claim 14 wherein said magnetic tape cartridge (10) further comprises first and second reels (26, 28) provided at respective ends of said tape run path (62) and with said magnetic tape (12) wound therearound for feeding from one to said other.

16. A combination according to claim 15 wherein said first and second tape reels (26, 28) have aligned rotational axes.

17. A combination according to claim 15 wherein said magnetic tape driving means (128) comprises a first gear (126) for rotation with said first reel (28), a second gear (124) provided for rotation with said second reel (26) and a third gear (128) coupled with said centre core disc (202) to be driven by driving torque transmitted through said centre core disc (202) as chucked on said rotary disc (302), said third gear (128) being movable between a first position where it engages with said first gear (126) for transmitting driving torque to said first gear (126) in forward drive of said magnetic tape (12), and a second position where it engages with said second gear (124) for transmitting driving torque to said second gear (124) in reverse drive of said magnetic tape (12).

8

FIG.1

FIG.2

FIG.3

*FIG.4*

*FIG.5*

0228286

# FIG.6

0228286

*FIG.7*

0228286

# FIG.8